# EUROPEAN PATENT APPLICATION

(11) **EP 4 164 331 A1**
(43) Date of publication of application: **12.04.2023**
(21) Application number: 21857584.3
(22) Date of filing: 13.08.2021
(51) Int. Cl.: H04W 76/28, H04W 24/02, H04W 52/02

(54) **METHOD AND APPARATUS FOR PROCESSING DISCONTINUOUS RECEPTION, TERMINAL, AND NETWORK SIDE DEVICE**

(30) Priority: 20.08.2020 CN 202010845164
(71) Applicant: Vivo Mobile Communication Co., Ltd., Dongguan, Guangdong 523863 (CN)
(72) Inventor: ZHENG, Qian, Dongguan, Guangdong 523863 (CN); YANG, Xiaodong, Dongguan, Guangdong 523863 (CN)
(74) Representative: Murgitroyd & Company
(86) International application number: PCT/CN2021/112460
(87) International publication number: WO 2022/037489

(57) **Abstract**

This application discloses a DRX processing method and apparatus, a terminal, and a network-side device. The method includes: sending DRX configuration preference information to a network-side device; where the DRX configuration preference information is used to assist the network-side device in configuring at least one of SL DRX and Uu DRX for a terminal.

## Description

### CROSS-REFERENCE TO RELATED APPLICATIONS

This application claims priority to Chinese Patent Application No. 202010845164.X, filed in China on August 20, 2020, which is incorporated herein by reference in its entirety.

### TECHNICAL FIELD

This application pertains to the field of communications technologies, and specifically relates to a discontinuous reception DRX processing method and apparatus, a terminal, and a network-side device.

### BACKGROUND

Sidelink (sidelink, SL for short) has been supported by long term evolution (Long Term Evolution, LTE) systems since release 12, and is used for direct data transmission between terminal devices (User Equipment, UE) without a network device.

The design of LTE sidelink is applicable to particular public safety affairs (for example, emergency communication in disaster sites such as fire or earthquake) or vehicle to everything (vehicle to everything, V2X) communication. Vehicle to everything communication includes various services, such as basic safety communication, advanced (autonomous) driving, platooning, and sensor expansion. LTE sidelink supports only broadcast communication, and therefore is mainly used for basic safety communication. Other advanced V2X services with strict quality of service (Quality of Service, QoS) requirements in terms of delay and reliability are supported by 5G new radio (New Radio, NR) sidelink.

At present, sidelink transmission is mainly divided into the following transmission modes: broadcast (broadcast), groupcast (groupcast), and unicast (unicast). Unicast, as the name implies, is one-to-one transmission. Groupcast is one-to-many transmission. Broadcast is also one-to-many transmission but does not have the concept of terminals belonging to one group. At present, sidelink unicast and groupcast communication supports the physical layer hybrid automatic repeat request (Hybrid Automatic Repeat reQuest, HARQ) feedback mechanism.

The discontinuous reception (Discontinuous Reception, DRX) mechanism is supported in both LTE and NR, and DRX on and off durations are configured to implement power saving for the terminal.

In the process of implementing this application, the inventors have found that the prior art has at least the following problem:

At present, the SL DRX mechanism is introduced for power saving in NR SL. To ensure normal operation of SL DRX, impact of Uu DRX needs to be considered. To be specific, when SL DRX and Uu DRX of an SL terminal operate simultaneously, alignment of two types of DRX configurations (mainly their on-durations) need to be ensured. However, there is no clear solution in the prior art to achieve this purpose.

### SUMMARY

Embodiments of this application are intended to provide a discontinuous reception DRX processing method and apparatus, a terminal, and a network-side device, so as to resolve the problem of keeping SL DRX and Uu DRX configurations aligned.

In order to resolve the foregoing technical problem, this application is implemented as follows:

According to a first aspect, an embodiment of this application provides a discontinuous reception DRX processing method, applied to a terminal and including:
sending DRX configuration preference information to a network-side device; where the DRX configuration preference information is used to assist the network-side device in configuring at least one of sidelink SL DRX and Uu DRX for the terminal.

According to a second aspect, an embodiment of this application provides a discontinuous reception DRX processing method, applied to a network-side device and including:
receiving DRX configuration preference information sent by a terminal; and
configuring at least one of sidelink SL DRX and Uu DRX for the terminal according to the DRX configuration preference information.

According to a third aspect, an embodiment of this application provides a discontinuous reception DRX processing apparatus, applied to a terminal and including:
a first sending module, configured to send DRX configuration preference information to a network-side device; where the DRX configuration preference information is used to assist the network-side device in configuring at least one of sidelink SL DRX and Uu DRX for the terminal.

According to a fourth aspect, an embodiment of this application provides a discontinuous reception DRX processing apparatus, applied to a network-side device and including:
a second receiving module, configured to receive DRX configuration preference information sent by a terminal; and
a configuration module, configured to configure at least one of sidelink SL DRX and Uu DRX for the terminal according to the DRX configuration preference information.

According to a fifth aspect, an embodiment of this application provides a terminal, where the terminal includes a processor, a memory, and a program or instructions stored in the memory and executable on the processor, and when the program or the instructions are executed by the processor, the steps of the method according to the first aspect are implemented.

According to a sixth aspect, an embodiment of this application provides a network-side device, where the network-side device includes a processor, a memory, and a program or instructions stored in the memory and executable on the processor, and when the program or the instructions are executed by the processor, the steps of the method according to the second aspect are implemented.

According to a seventh aspect, an embodiment of this application provides a readable storage medium, where a program or instructions are stored in the readable storage medium, and when the program or the instructions are executed by a processor, the steps of the method according to the first aspect are implemented, or the steps of the method according to the second aspect are implemented.

According to an eighth aspect, an embodiment of the application provides a chip, where the chip includes a processor and a communications interface, the communications interface is coupled to the processor, and the processor is configured to run a program or instructions of a network-side device to implement the method according to the first aspect or the method according to the second aspect.

In the embodiments of this application, the terminal reports the DRX configuration preference information to the network-side device to assist the network-side device in configuring at least one of SL DRX and Uu DRX for the terminal, so as to implement alignment processing of two types of DRX configurations and alignment failure handling. This ensures normal operation of SL DRX, and achieves the purpose of power saving for SL terminals.

### BRIEF DESCRIPTION OF DRAWINGS

FIG. 1 is a block diagram of a wireless communications system to which the embodiments of this application are applicable;
FIG. 2 is a first schematic diagram of steps of a discontinuous reception DRX processing method according to an embodiment of this application;
FIG. 3 is a second schematic diagram of steps of a discontinuous reception DRX processing method according to an embodiment of this application;
FIG. 4 is a first schematic structural diagram of a discontinuous reception DRX processing apparatus according to an embodiment of this application;
FIG. 5 is a second schematic structural diagram of a discontinuous reception DRX processing apparatus according to an embodiment of this application;
FIG. 6 is a schematic structural diagram of a communications device according to an embodiment of this application;
FIG. 7 is a schematic structural diagram of a terminal according to an embodiment of this application; and
FIG. 8 is a schematic structural diagram of a network-side device according to an embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

In the specification and claims of this application, the terms such as "first", "second", and the like are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first", "second", and the like are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship.

It should be noted that technologies described in the embodiments of this application are not limited to a long term evolution (Long Term Evolution, LTE)/LTE-advanced (LTE-Advanced, LTE-A) system, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the afore-mentioned systems and radio technologies, and may also be used in other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communications system.

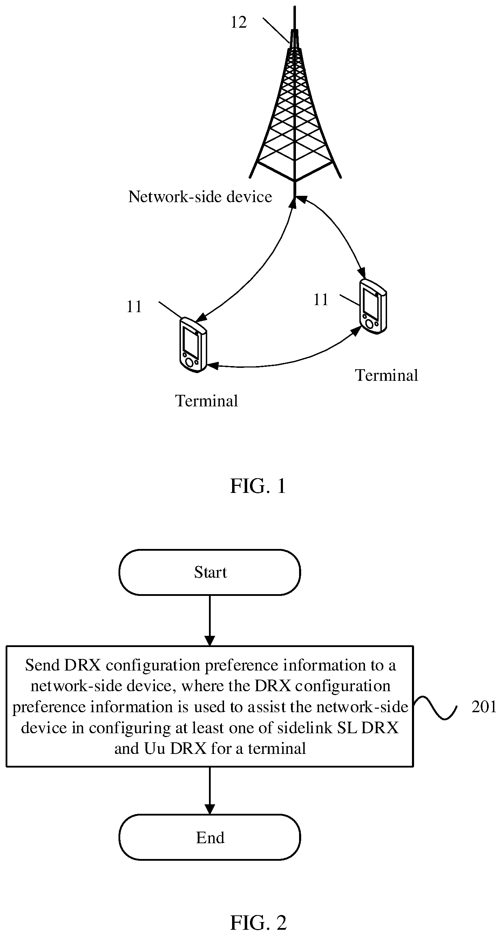

FIG. 1 is a block diagram of a wireless communications system to which the embodiments of this application are applicable. The wireless communications system includes a terminal 11 and a network-side device 12. The terminal 11 may also be referred to as a terminal device or user terminal (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a wrist band, earphones, glasses, or the like. It should be noted that a specific type of the terminal 11 is not limited in the embodiments of this application. The network-side device 12 may be a base station or a core network. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

With reference to the accompanying drawings, the following describes in detail, by using specific embodiments and application scenarios thereof, a discontinuous reception DRX processing method and apparatus, a terminal, and a network-side device provided in the embodiments of this application.

As shown in FIG. 2, an embodiment of this application further provides a discontinuous reception DRX processing method, applied to a terminal and including the following step.

Step 201: Send DRX configuration preference information to a network-side device; where the DRX configuration preference information is used to assist the network-side device in configuring at least one of sidelink SL DRX and Uu DRX for the terminal.

In this embodiment of this application, the DRX configuration preference information includes at least one of the following:
Uu DRX being preferentially guaranteed or SL DRX being preferentially guaranteed;
whether switching of SL resource allocation mode is allowed, where the SL resource allocation mode includes a base-station-scheduled mode and a terminal autonomous selection mode, and working does not need to rely on Uu DRX in the terminal autonomous selection mode;
power saving being preferentially guaranteed;
quality of service QoS being preferentially guaranteed;
offset relative to SL DRX on-duration, that is, the terminal may wake up at a time with an offset relative to the SL DRX on-duration to check whether there are scheduling resources for the base station scheduling mode; and
whether wake-up of SL DRX is allowed, that is, whether the terminal needs to additionally monitor wake-up signals at the physical layer to determine whether to wake up in the SL DRX on-duration.

In an optional embodiment, before step 201, the method further includes:
determining whether a first condition for sending the DRX configuration preference information is satisfied.

Correspondingly, step 201 includes:
in a case that the first condition is satisfied, sending the DRX configuration preference information to the network-side device; otherwise, skipping sending the DRX configuration preference information to the network-side device.

The first condition includes at least one of the following:
an indication of allowing the terminal to send DRX assistance information having been received;
a prohibit timer being not running or having expired; and
DRX assistance information having changed, for example, SL DRX assistance information has changed and/or Uu DRX assistance information has changed.

The DRX assistance information includes at least the DRX configuration preference information; and the DRX assistance information may also include specific configuration information of DRX. The DRX includes: SL DRX and/or Uu DRX.

It should be noted that the indication of allowing the terminal to send the DRX assistance information and the time length of the prohibit timer are configured by the network-side device, so that the network can control a process of reporting the DRX assistance information by the terminal. This prevents the terminal from frequently reporting the DRX assistance information, achieving the purpose of power saving.

In another optional embodiment, the method further includes:
receiving configuration information sent by the network-side device, where the configuration information includes at least one of the following:
first indication information, where the first indication information is used to indicate whether the terminal is allowed to send the DRX assistance information, for example, a 1-bit indication is introduced, "1 or true" indicates that the terminal is allowed to send the DRX assistance information, and "0 or false" indicates that the terminal is not allowed to send the DRX assistance information; or vice versa; and
a time length of the prohibit timer, where, for example, after the terminal sends the DRX configuration preference information, the prohibit timer is started, and then whether the prohibit timer is running is determined each time before sending the DRX configuration preference information is triggered; and if the prohibit timer is running, sending the DRX assistance information is not allowed, or if the prohibit timer is not running or has expired, the terminal is allowed to send the DRX assistance information.

In an optional embodiment, the receiving configuration information sent by the network-side device includes:
receiving a radio resource control RRC reconfiguration message or system information block SIB sent by the network-side device, where the RRC reconfiguration message or the SIB carries the configuration information.

In another optional embodiment, step 201 includes:
if the first condition is satisfied when the terminal is in a current serving cell, sending the DRX configuration preference information in the current serving cell;
   or,
if the first condition is not satisfied when the terminal is in the current serving cell, reselecting on or handing over to a cell satisfying the first condition, and sending the DRX configuration preference information.

The first condition includes at least one of the following:
an indication of allowing the terminal to send DRX assistance information having been received;
a prohibit timer being not running or having expired; and
DRX assistance information having changed, for example, SL DRX assistance information has changed and/or Uu DRX assistance information has changed.

For example, for a terminal in a connected state, the terminal first determines whether the first condition is satisfied; and if yes, sends DRX configuration preference information in the current serving cell; or if not, hands over to a cell satisfying the condition, and sends the DRX configuration preference information.

For another example, for a terminal in an idle state or an inactive state, the terminal first determines whether the first condition is satisfied; and if yes, initiates an RRC connection establishment or recovery procedure in the current serving cell and then sends the DRX configuration preference information; or if not, performs cell reselection to reselect to a cell satisfying the first condition, initiates an RRC connection establishment or recovery procedure, and then sends the DRX configuration preference information.

To sum up, in this embodiment of this application, the terminal reports the DRX configuration preference information to the network-side device to assist the network-side device in configuring at least one of SL DRX and Uu DRX for the terminal, so as to implement alignment processing of two types of DRX configurations and alignment failure handling. This ensures normal operation of SL DRX, and achieves the purpose of power saving for SL terminals.

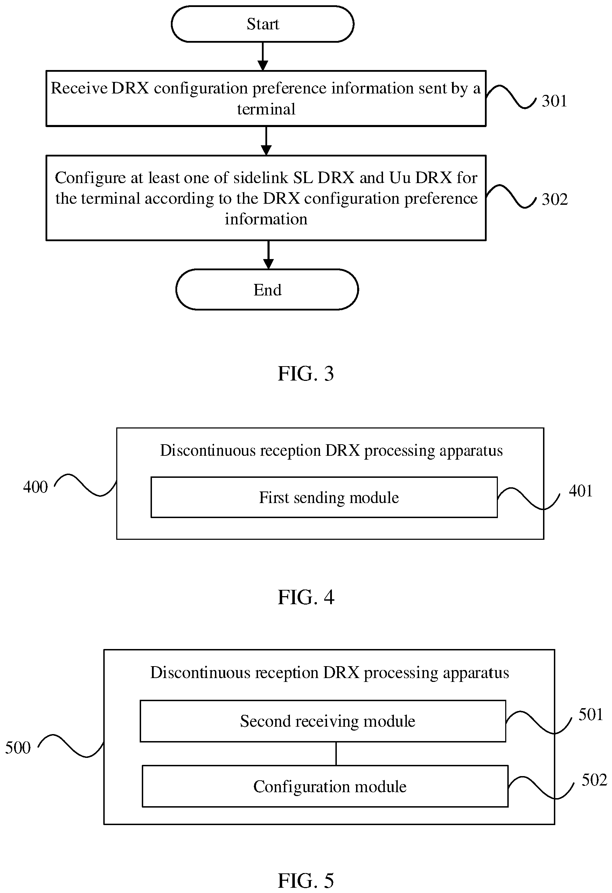

As shown in FIG. 3, an embodiment of this application further provides a discontinuous reception DRX processing method, applied to a network-side device and including the following steps.

Step 301: Receive DRX configuration preference information sent by a terminal.

Step 302: Configure at least one of sidelink SL DRX and Uu DRX for the terminal according to the DRX configuration preference information.

Optionally, in a case that alignment of SL DRX and Uu DRX can be implemented according to the DRX configuration preference information, the network-side device configures at least one of SL DRX and Uu DRX for the terminal.

In this embodiment of this application, the DRX configuration preference information includes at least one of the following:
Uu DRX being preferentially guaranteed or SL DRX being preferentially guaranteed;
whether switching of SL resource allocation mode is allowed, where the SL resource allocation mode includes a base-station-scheduled mode and a terminal autonomous selection mode, and working does not need to rely on Uu DRX in the terminal autonomous selection mode;
power saving being preferentially guaranteed;
quality of service QoS being preferentially guaranteed;
offset relative to SL DRX on-duration, that is, the terminal may wake up at a time with an offset relative to the SL DRX on-duration to check whether there are scheduling resources for the base station scheduling mode; and
whether wake-up of SL DRX is allowed, that is, whether the terminal needs to additionally monitor wake-up signals at the physical layer to determine whether to wake up in the SL DRX on-duration.

It should be noted that, in this embodiment of this application, the network-side device can configure for the terminal the indication of allowing the terminal to send DRX assistance information and the time length of the prohibit timer, so that the network can control a process of reporting the DRX assistance information by the terminal. This prevents the terminal from frequently reporting the DRX assistance information, achieving the purpose of power saving.

The method further includes:
sending configuration information, where the configuration information includes at least one of the following:
first indication information, where the first indication information is used to indicate whether the terminal is allowed to send the DRX assistance information, and the DRX assistance information includes at least the DRX configuration preference information; for example, a 1-bit indication is introduced, "1 or true" indicates that the terminal is allowed to send the DRX assistance information, and "0 or false" indicates that the terminal is not allowed to send the DRX assistance information; or vice versa; and
a time length of the prohibit timer, where, for example, after the terminal sends the DRX configuration preference information, the prohibit timer is started, and then whether the prohibit timer is running is determined before each time sending the DRX configuration preference information is triggered; and if the prohibit timer is running, sending the DRX assistance information is not allowed, or if the prohibit timer is not running or has expired, the terminal is allowed to send the DRX assistance information.

In an optional embodiment, the sending configuration information includes:
sending a radio resource control RRC reconfiguration message or system information block SIB, where the RRC reconfiguration message or the SIB carries the configuration information.

In another optional embodiment, in a case that alignment of the SL DRX and the Uu DRX fails, the method further includes:
sending second indication information to the terminal according to the DRX configuration preference information, where the second indication information is used to indicate at least one of the following:
indicating switching an SL resource allocation mode of the terminal from a base-station-scheduled mode to a terminal autonomous selection mode; and
indicating the terminal disabling SL DRX function or Uu DRX function.

To sum up, in this embodiment of this application, the terminal reports the DRX configuration preference information to the network-side device to assist the network-side device in configuring at least one of SL DRX and Uu DRX for the terminal, so as to implement alignment processing of two types of DRX configurations and alignment failure handling. This ensures normal operation of SL DRX, and achieves the purpose of power saving for SL terminals.

It should be noted that the discontinuous reception DRX processing method in the embodiments of this application may be executed by a discontinuous reception DRX processing apparatus, or by a control module for executing the discontinuous reception DRX processing method in the discontinuous reception DRX processing apparatus. In the embodiments of this application, the discontinuous reception DRX processing apparatus provided by the embodiments of this application is described by using the discontinuous reception DRX processing method being executed by the discontinuous reception DRX processing apparatus as an example.

As shown in FIG. 4, an embodiment of this application further provides a discontinuous reception DRX processing apparatus, applied to a terminal and including:
a first sending module 401, configured to send DRX configuration preference information to a network-side device; where the DRX configuration preference information is used to assist the network-side device in configuring at least one of sidelink SL DRX and Uu DRX for the terminal.

In an optional embodiment, the DRX configuration preference information includes at least one of the following:
Uu DRX being preferentially guaranteed or SL DRX being preferentially guaranteed;
whether switching of SL resource allocation mode is allowed;
power saving being preferentially guaranteed;
quality of service QoS being preferentially guaranteed;
offset relative to SL DRX on-duration; and
whether wake-up of SL DRX is allowed.

In an optional embodiment, the apparatus further includes:
a determining module, configured to determine whether a first condition for sending the DRX configuration preference information is satisfied.

In an optional embodiment, the first sending module includes:
a first sending submodule, configured to: in a case that the first condition is satisfied, send the DRX configuration preference information to the network-side device.

In an optional embodiment, the first condition includes at least one of the following:
an indication of allowing the terminal to send DRX assistance information having been received;
a prohibit timer being not running or having expired; and
DRX assistance information having changed; where
the DRX assistance information includes at least the DRX configuration preference information.

In an optional embodiment, the apparatus further includes:
a first receiving module, configured to receive configuration information sent by the network-side device, where the configuration information includes at least one of the following:
first indication information, where the first indication information is used to indicate whether the terminal is allowed to send the DRX assistance information; and
a time length of the prohibit timer.

In an optional embodiment, the first receiving module includes:
a first receiving submodule, configured to: receive a radio resource control RRC reconfiguration message or system information block SIB sent by the network-side device, where the RRC reconfiguration message or the SIB carries the configuration information.

In an optional embodiment, the first sending module includes:
a second sending submodule, configured to: if the first condition is satisfied when the terminal is in a current serving cell, send the DRX configuration preference information in the current serving cell; or
configured to: if the first condition is not satisfied when the terminal is in the current serving cell, reselect to or hand over to a cell satisfying the first condition, and send the DRX configuration preference information.

In this embodiment of this application, the terminal reports the DRX configuration preference information to the network-side device to assist the network-side device in configuring at least one of SL DRX and Uu DRX for the terminal, so as to implement alignment processing of two types of DRX configurations and alignment failure handling. This ensures normal operation of SL DRX, and achieves the purpose of power saving for SL terminals.

It should be noted that the discontinuous reception DRX processing apparatus provided by this embodiment of this application is an apparatus capable of executing the discontinuous reception DRX processing method, and all embodiments of the discontinuous reception DRX processing method are applicable to the apparatus, with the same or similar beneficial effects achieved.

As shown in FIG. 5, an embodiment of this application further provides a discontinuous reception DRX processing apparatus 500, applied to a network-side device and including:
a second receiving module 501, configured to receive DRX configuration preference information sent by a terminal; and
a configuration module 502, configured to configure at least one of sidelink SL DRX and Uu DRX for the terminal according to the DRX configuration preference information.

In an optional embodiment, the DRX configuration preference information includes at least one of the following:
Uu DRX being preferentially guaranteed or SL DRX being preferentially guaranteed;
whether switching of SL resource allocation mode is allowed;
power saving being preferentially guaranteed;
quality of service QoS being preferentially guaranteed;
offset relative to SL DRX on-duration; and
whether wake-up of SL DRX is allowed.

In an optional embodiment, the apparatus further includes:
a second sending module, configured to send configuration information, where the configuration information includes at least one of the following:
first indication information, where the first indication information is used to indicate whether the terminal is allowed to send DRX assistance information, and the DRX assistance information includes at least the DRX configuration preference information; and
a time length of the prohibit timer.

In an optional embodiment, the second sending module includes:
a third sending submodule, configured to send a radio resource control RRC reconfiguration message or system information block SIB, where the RRC reconfiguration message or the SIB carries the configuration information.

In an optional embodiment, in a case that alignment of SL DRX and Uu DRX fails, the apparatus further includes:
a third sending module, configured to send second indication information to the terminal according to the DRX configuration preference information, where the second indication information is used to indicate at least one of the following:
indicating switching an SL resource allocation mode of the terminal from a base-station-scheduled mode to a terminal autonomous selection mode; and
indicating the terminal disabling SL DRX function or Uu DRX function.

In this embodiment of this application, the terminal reports the DRX configuration preference information to the network-side device to assist the network-side device in configuring at least one of SL DRX and Uu DRX for the terminal, so as to implement alignment processing of two types of DRX configurations and alignment failure handling. This ensures normal operation of SL DRX, and achieves the purpose of power saving for SL terminals.

It should be noted that the discontinuous reception DRX processing apparatus provided by this embodiment of this application is an apparatus capable of executing the discontinuous reception DRX processing method, and all embodiments of the discontinuous reception DRX processing method are applicable to the apparatus, with the same or similar beneficial effects achieved.

The discontinuous reception DRX processing apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network-attached storage (Network Attached Storage, NAS), a personal computer (personal computer, PC), a television (television, TV), a teller machine, a self-service machine, or the like. This is not specifically limited in the embodiments of this application.

The discontinuous reception DRX processing apparatus in this embodiment of this application may be an apparatus having an operating system. The operating system may be an Android (Android) operating system, an iOS operating system, or other possible operating systems, and is not specifically limited in the embodiments of this application.

The discontinuous reception DRX processing apparatus provided in this embodiment of this application is capable of implementing the processes in the method embodiments in FIG. 1 to FIG. 3. To avoid repetition, details are not described herein again.

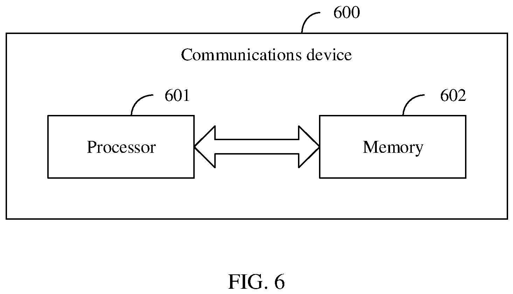

Optionally, as shown in FIG. 6, an embodiment of this application further provides a communications device 600, including a processor 601, a memory 602, and a program or instructions stored in the memory 602 and executable on the processor 601. For example, when the communications device 600 is a terminal and when the program or the instructions are executed by the processor 601, the processes of the foregoing embodiment of the DRX processing method are implemented, with the same technical effects achieved. When the communications device 600 is a network-side device and when the program or the instructions are executed by the processor 601, the processes of the foregoing embodiment of the DRX processing method are implemented, with the same technical effects achieved. To avoid repetition, details are not described herein again.

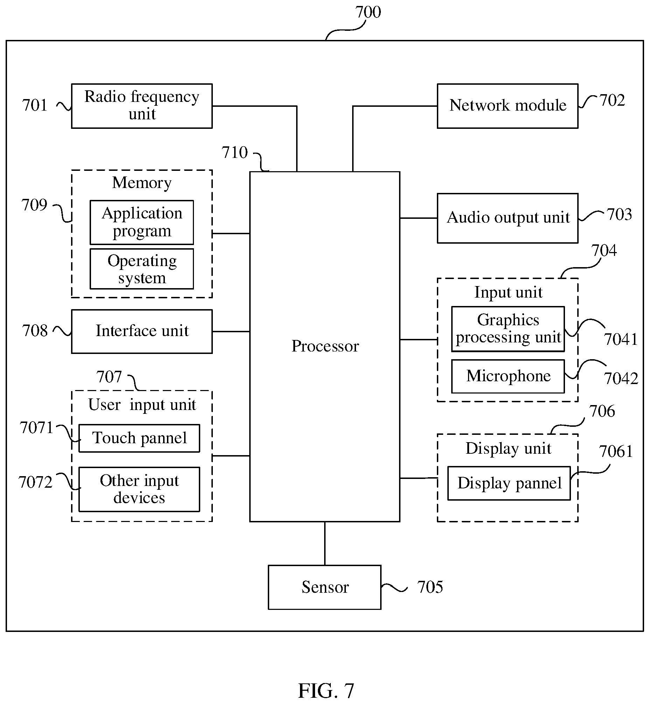

FIG. 7 is a schematic diagram of a hardware structure of a terminal for implementing the embodiments of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in FIG. 7, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing; and also sends uplink data to the network-side device. Generally, the radio frequency unit 701 includes but is not limited to an antenna, at least one amplifier, a transceiver, a coupler, a low noise amplifier, a duplexer, and the like.

The memory 709 may be configured to store software programs or instructions and various data. The memory 709 may include a program or instruction storage area and a data storage area. The program or instruction storage area may store an operating system, an application program or instructions required by at least one function (for example, a sound playback function or an image playback function), and the like. In addition, the memory 709 may include a high-speed random access memory, and may further include a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory, for example, at least one disk storage device, a flash memory device, or another volatile solid-state storage device.

The processor 710 may include one or more processing units. Optionally, an application processor and a modem processor may be integrated in the processor 710. The application processor primarily processes an operating system, user interfaces, application programs or instructions, and the like. The modem processor primarily processes radio communication, for example, being a baseband processor. It can be understood that the modem processor may alternatively be not integrated in the processor 710.

The radio frequency unit 701 is configured to send DRX configuration preference information to a network-side device; where the DRX configuration preference information is used to assist the network-side device in configuring at least one of sidelink SL DRX and Uu DRX for the terminal.

In this embodiment of this application, the terminal reports the DRX configuration preference information to the network-side device to assist the network-side device in configuring at least one of SL DRX and Uu DRX for the terminal, so as to implement alignment processing of two types of DRX configurations and alignment failure handling. This ensures normal operation of SL DRX, and achieves the purpose of power saving for SL terminals.

It should be noted that the terminal provided in this embodiment of this application is a terminal capable of executing the discontinuous reception DRX processing method, and all embodiments of the foregoing discontinuous reception DRX processing method are applicable to the terminal, with the same or similar beneficial effects achieved.

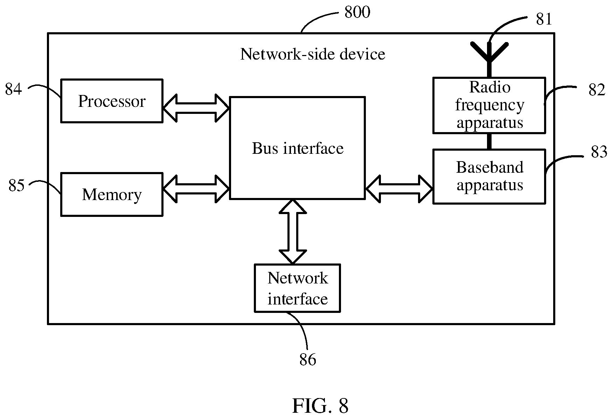

Specifically, an embodiment of this application further provides a network-side device. As shown in FIG. 8, the network device 800 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The frequency band processing apparatus may be located in the baseband apparatus 83. The method performed by the network-side device in the foregoing embodiments may be implemented in the baseband apparatus 83, and the baseband apparatus 83 includes a processor 84 and a memory 85.

The baseband apparatus 83 may include, for example, at least one baseband processing unit, where a plurality of chips are disposed on the baseband processing unit. As shown in FIG. 8, one of the chips is, for example, the processor 84, connected to the memory 85, to invoke a program in the memory 85 to perform the operation of the network-side device shown in the foregoing method embodiment.

The baseband apparatus 83 may further include a network interface 86, configured to exchange information with the radio frequency apparatus 82, where the interface is, for example, a common public radio interface (common public radio interface, CPRI).

Specifically, the network-side device in this embodiment of this application further includes: instructions or a program stored in the memory 85 and executable on the processor 84. The processor 84 invokes the instructions or program in the memory 85 to execute the method executed by the modules shown in FIG. 8, with the same technical effects achieved. To avoid repetition, details are not described herein again.

An embodiment of the present invention further provides a readable storage medium, where a program or instructions are stored in the readable storage medium. When the program or instructions are executed by a processor, the processes of the foregoing discontinuous reception DRX processing method embodiment can be implemented, with same technical effects achieved. To avoid repetition, details are not described herein again.

The processor is a processor in the electronic device described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface, the communications interface is coupled to the processor, and the processor is configured to run a program or instructions to implement the processes of the foregoing discontinuous reception DRX processing method embodiments, with the same technical effects achieved. To avoid repetition, details are not repeated herein.

It should be understood that the chip mentioned in the embodiments of this application may also be referred to as a system-level chip, a system chip, a chip system, a system-on-chip, or the like.

An embodiment of this application provides a computer program product, where the computer program product is stored in a non-volatile storage medium, and when being executed by at least one processor, the computer program product is configured to implement the processes of the foregoing discontinuous reception DRX processing method embodiments, with the same technical effects achieved. To avoid repetition, details are not repeated herein.

It may be understood that the embodiments described in this disclosure may be implemented by hardware, software, firmware, middleware, microcode, or a combination thereof. For hardware implementation, a module, a unit, a submodule, a subunit, and the like may be implemented in one or more application specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this application, or a combination thereof.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

The above is only the specific implementation mode of the application and not intended to limit the scope of protection of the application. Any variations or replacements apparent to those skilled in the art within the technical scope disclosed by the application shall fall within the scope of protection of the application. Therefore, the protection scope of this application shall be subject to the protection scope of the claims.

## Claims

1. A discontinuous reception DRX processing method, applied to a terminal and comprising:
sending DRX configuration preference information to a network-side device; wherein
the DRX configuration preference information is used to assist the network-side device in configuring at least one of sidelink SL DRX and Uu DRX for the terminal.

2. The method according to claim 1, wherein the DRX configuration preference information comprises at least one of following:
Uu DRX being preferentially guaranteed or SL DRX being preferentially guaranteed;
whether switching of SL resource allocation mode is allowed;
power saving being preferentially guaranteed;
quality of service QoS being preferentially guaranteed;
offset relative to SL DRX on-duration; and
whether wake-up of SL DRX is allowed.

3. The method according to claim 1, wherein before the sending the DRX configuration preference information to the network-side device, the method further comprises:
determining whether a first condition for sending the DRX configuration preference information is satisfied.

4. The method according to claim 3, wherein the sending the DRX configuration preference information to the network-side device comprises:
in a case that the first condition is satisfied, sending the DRX configuration preference information to the network-side device.

5. The method according to claim 3 or 4, wherein the first condition comprises at least one of following:
an indication of allowing the terminal to send DRX assistance information having been received;
a prohibit timer being not running or having expired; and
DRX assistance information having changed; wherein
the DRX assistance information comprises at least the DRX configuration preference information.

6. The method according to claim 5, further comprising:
receiving configuration information sent by the network-side device; wherein
the configuration information comprises at least one of following:
first indication information, wherein the first indication information is used to indicate whether the terminal is allowed to send the DRX assistance information; and
a time length of the prohibit timer.

7. The method according to claim 6, wherein the receiving the configuration information sent by the network-side device comprises:
receiving a radio resource control RRC reconfiguration message or system information block SIB sent by the network-side device; wherein
the RRC reconfiguration message or the SIB carries the configuration information.

8. The method according to claim 3, wherein the sending the DRX configuration preference information to the network-side device comprises:
if the first condition is satisfied when the terminal is in a current serving cell, sending the DRX configuration preference information in the current serving cell; or
if the first condition is not satisfied when the terminal is in the current serving cell, reselecting to or handing over to a cell satisfying the first condition, and sending the DRX configuration preference information.

9. A discontinuous reception DRX processing method, applied to a network-side device and comprising:
receiving DRX configuration preference information sent by a terminal; and
configuring at least one of sidelink SL DRX and Uu DRX for the terminal according to the DRX configuration preference information.

10. The method according to claim 9, wherein the DRX configuration preference information comprises at least one of following:
Uu DRX being preferentially guaranteed or SL DRX being preferentially guaranteed;
whether switching of SL resource allocation mode is allowed;
power saving being preferentially guaranteed;
quality of service QoS being preferentially guaranteed;
offset relative to SL DRX on-duration; and
whether wake-up of SL DRX is allowed.

11. The method according to claim 9, further comprising:
sending configuration information; wherein
the configuration information comprises at least one of following:
first indication information, wherein the first indication information is used to indicate whether the terminal is allowed to send DRX assistance information, and the DRX assistance information comprises at least the DRX configuration preference information; and
a time length of the prohibit timer.

12. The method according to claim 11, wherein the sending the configuration information comprises:
sending a radio resource control RRC reconfiguration message or system information block SIB; wherein
the RRC reconfiguration message or the SIB carries the configuration information.

13. The method according to claim 9, wherein in a case that alignment of the SL DRX and the Uu DRX fails, the method further comprises:
sending second indication information to the terminal according to the DRX configuration preference information; wherein
the second indication information is used to indicate at least one of following:
indicating switching an SL resource allocation mode of the terminal from a base-station-scheduled mode to a terminal autonomous selection mode; and
indicating the terminal disabling SL DRX function or Uu DRX function.

14. A discontinuous reception DRX processing apparatus, applied to a terminal and comprising:
a first sending module, configured to send DRX configuration preference information to a network-side device; wherein the DRX configuration preference information is used to assist the network-side device in configuring at least one of sidelink SL DRX and Uu DRX for the terminal.

15. The apparatus according to claim 14, wherein the DRX configuration preference information comprises at least one of following:
Uu DRX being preferentially guaranteed or SL DRX being preferentially guaranteed;
whether switching of SL resource allocation mode is allowed;
power saving being preferentially guaranteed;
quality of service QoS being preferentially guaranteed;
offset relative to SL DRX on-duration; and
whether wake-up of SL DRX is allowed.

16. The apparatus according to claim 14, further comprising:
a determining module, configured to determine whether a first condition for sending the DRX configuration preference information is satisfied.

17. The apparatus according to claim 16, wherein the first sending module comprises:
a first sending submodule, configured to: in a case that the first condition is satisfied, send the DRX configuration preference information to the network-side device.

18. The apparatus according to claim 16 or 17, wherein the first condition comprises at least one of following:
an indication of allowing the terminal to send DRX assistance information having been received;
a prohibit timer being not running or having expired; and
DRX assistance information having changed; wherein
the DRX assistance information comprises at least the DRX configuration preference information.

19. The apparatus according to claim 18, further comprising:
a first receiving module, configured to receive configuration information sent by the network-side device, wherein the configuration information comprises at least one of following:
first indication information, wherein the first indication information is used to indicate whether the terminal is allowed to send the DRX assistance information; and
a time length of the prohibit timer.

20. The apparatus according to claim 19, wherein the first receiving module comprises:
a first receiving submodule, configured to: receive a radio resource control RRC reconfiguration message or system information block SIB sent by the network-side device; wherein
the RRC reconfiguration message or the SIB carries the configuration information.

21. The apparatus according to claim 16, wherein the first sending module comprises:
a second sending submodule, configured to: if the first condition is satisfied when the terminal is in a current serving cell, send the DRX configuration preference information in the current serving cell; or
configured to: if the first condition is not satisfied when the terminal is the current serving cell, reselect to or hand over to a cell satisfying the first condition, and send the DRX configuration preference information.

22. A terminal, comprising a processor, a memory, and a program or instructions stored in the memory and executable on the processor, wherein when the program or instructions are executed by the processor, steps of the discontinuous reception DRX processing method according to any one of claims 1 to 8 are implemented.

23. A discontinuous reception DRX processing apparatus, applied to a network-side device and comprising:
a second receiving module, configured to receive DRX configuration preference information sent by a terminal; and
a configuration module, configured to configure at least one of sidelink SL DRX and Uu DRX for the terminal according to the DRX configuration preference information.

24. The apparatus according to claim 23, wherein the DRX configuration preference information comprises at least one of following:
Uu DRX being preferentially guaranteed or SL DRX being preferentially guaranteed;
whether switching of SL resource allocation mode is allowed;
power saving being preferentially guaranteed;
quality of service QoS being preferentially guaranteed;
offset relative to SL DRX on-duration; and
whether wake-up of SL DRX is allowed.

25. The apparatus according to claim 23, further comprising:
a second sending module, configured to send configuration information, wherein the configuration information comprises at least one of following:
first indication information, wherein the first indication information is used to indicate whether the terminal is allowed to send DRX assistance information, and the DRX assistance information comprises at least the DRX configuration preference information; and
a time length of the prohibit timer.

26. The apparatus according to claim 25, wherein the second sending module comprises:
a third sending submodule, configured to send a radio resource control RRC reconfiguration message or system information block SIB; wherein
the RRC reconfiguration message or the SIB carries the configuration information.

27. The apparatus according to claim 23, wherein in a case that alignment of the SL DRX and the Uu DRX fails, the apparatus further comprises:
a third sending module, configured to send second indication information to the terminal according to the DRX configuration preference information; wherein
the second indication information is used to indicate at least one of following:
indicating switching an SL resource allocation mode of the terminal from a base-station-scheduled mode to a terminal autonomous selection mode; and
indicating the terminal disabling SL DRX function or Uu DRX function.

28. A network-side device, comprising a processor, a memory, and a program or instructions stored in the memory and executable on the processor, wherein when the program or instructions are executed by the processor, steps of the discontinuous reception DRX processing method according to any one of claims 9 to 13 are implemented.

29. A readable storage medium, wherein a program or instructions are stored in the readable storage medium; and when the program or the instructions are executed by a processor, steps of the discontinuous reception DRX processing method according to any one of claims 1 to 8 are implemented; or when the program or the instructions are executed by a processor, steps of the discontinuous reception DRX processing method according to any one of claims 9 to 13 are implemented.

30. A chip, comprising a processor and a communications interface, wherein the communications interface is coupled to the processor, and the processor is configured to execute a program or instructions to implement the discontinuous reception DRX processing method according to any one of claims 1 to 8 or the discontinuous reception DRX processing method according to any one of claims 9 to 13.

31. A computer program product, wherein the computer program product is stored in a non-volatile storage medium, and the computer program product is configured to be executed by at least one processor to implement the discontinuous reception DRX processing method according to any one of claims 1 to 8 or the discontinuous reception DRX processing method according to any one of claims 9 to 13.
